(19) Europäisches Patentamt
European Patent Office
Office européen des brevets

(11) **EP 4 761 340 A1**

(12) **EUROPEAN PATENT APPLICATION**
published in accordance with Art. 153(4) EPC

(43) Date of publication:
**17.06.2026 Bulletin 2026/25**

(21) Application number: **23948137.7**

(22) Date of filing: **10.08.2023**

(51) International Patent Classification (IPC):
**H04W 24/10** (2009.01)

(52) Cooperative Patent Classification (CPC):
**H04W 24/02; H04W 24/10**

(86) International application number:
**PCT/CN2023/112408**

(87) International publication number:
**WO 2025/030567 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **LIU, Min**
**Beijing 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **METHOD FOR TRANSMITTING CONFIGURATION INFORMATION, TERMINAL, NETWORK DEVICE, COMMUNICATION SYSTEM, AND MEDIUM**

(57)     The present disclosure provides a method for transmitting configuration information, a terminal, a network device, a communication system, and a medium. The method comprises: a terminal receives first configuration information and second configuration information which are sent by a network device, the first configuration information comprising a first reference signal (RS) for performing a monitoring stage based on an artificial intelligence (AI) or machine learning (ML) model, and the second configuration information comprising a report configuration associated with the first RS or the first configuration information. In the method of the present disclosure, the terminal receives the configuration information sent by the network device so as to obtain the first RS and the report configuration which are configured in the monitoring stage, so that the terminal can evaluate the related performance of the model monitoring stage on the basis of the first configuration information, and can determine, on the basis of the second configuration information, whether an evaluation result needs to be reported, and thus the terminal can perform a reasonable operation in the model monitoring stage, so as to perfect the model monitoring process.

FIG. 2a

## Description

**TECHNICAL FIELD**

The present disclosure relates to the field of communication technology, and specifically to a method for transmitting configuration information, a terminal, a network device, a communication system, and a medium.

**BACKGROUND**

In artificial intelligence (AI) or machine learning (ML) based enhancement, a terminal-side model may be used for information enhancement. In different AI-based or ML-based enhancement models, a model may be used for training, inference, or monitoring, so that data output by the model may be obtained based on a converged model. In a supervised phase, a terminal may monitor or supervise a performance of the model.

**SUMMARY**

The present disclosure provides a method for transmitting configuration information, a terminal, a network device, a communication system, and a medium.

According to a first aspect, the present disclosure provides a method for receiving configuration information, including: receiving, by a terminal, first configuration information and second configuration information sent by a network device, in which the first configuration information includes a first reference signal (RS) used for a supervised phase based on a model, in which the model includes an artificial intelligence (AI) model or a machine learning (ML) model, and the second configuration information includes a report configuration associated with the first RS or the first configuration information.

According to a second aspect, the present disclosure provides a method for sending configuration information, including: sending, by a network device, first configuration information and second configuration information to a terminal, in which the first configuration information includes a first RS used for a supervised phase based on a model, in which the model includes an AI model or an ML model, and the second configuration information includes a report configuration associated with the first RS or the first configuration information.

According to a third aspect, the present disclosure provides a terminal, including: a transceiver module, configured to receive first configuration information and second configuration information sent by a network device, in which the first configuration information includes a first RS used for a supervised phase based on a model, in which the model includes an AI model or an ML model, and the second configuration information includes a report configuration associated with the first RS or the first configuration information.

According to a fourth aspect, the present disclosure provides a network device, including: a transceiver module, configured to send first configuration information and second configuration information to a terminal, in which the first configuration information includes a first RS used for a supervised phase based on a model, in which the model includes an AI model or an ML model, and the second configuration information includes a report configuration associated with the first RS or the first configuration information.

According to a fifth aspect, the present disclosure provides a terminal, including: one or more processors, in which the network device performs the method according to the first aspect.

According to a sixth aspect, the present disclosure provides a network device, including: one or more processors, in which the network device performs the method according to the second aspect.

According to a seventh aspect, the present disclosure provides a communication system, including a terminal and a network device, in which the terminal is configured to implement the method according to the first aspect, and the network device is configured to implement the method according to the second aspect.

According to an eighth aspect, the present disclosure provides a storage medium for storing instructions. When the instructions are executed on a communication device, the communication device is caused to perform the method according to the first aspect or the second aspect.

In the method of the present disclosure, the terminal receives the configuration information sent by the network device to learn about the first RS configured for the supervised phase and the report configuration, so that the terminal may perform a related performance evaluation for the supervised phase of the model according to the first configuration information, and may determine whether to report an evaluation result according to the second configuration information, thus enabling the terminal to perform a reasonable operation during the supervised phase of the model to improve a model supervision process.

**BRIEF DESCRIPTION OF THE DRAWINGS**

In order to more clearly illustrate the technical solution in the embodiments of the present disclosure, the accompanying drawings to be used in the embodiments of the present disclosure are described below. The following accompanying drawings are only part embodiments of the present disclosure, and do not constitute a limitation on the protection scope of the present disclosure.

FIG. 1 is an illustrative schematic diagram of an architecture of a communication system according to an embodiment of the present disclosure.

FIG. 2a is an illustrative interaction diagram of a method according to an embodiment of the present disclosure.

FIG. 2b is a schematic diagram of a channel state information (CSI) prediction according to an embodiment of the present disclosure.

FIG. 3a to FIG. 3b are illustrative flowcharts of a method according to an embodiment of the present disclosure.

FIG. 4a to FIG. 4b are illustrative flowcharts of a method according to an embodiment of the present disclosure.

FIG. 5a is a block diagram of a terminal according to an embodiment of the present disclosure.

FIG. 5b is a block diagram of a network device according to an embodiment of the present disclosure.

FIG. 6a is a block diagram of a communication device according to an embodiment of the present disclosure.

FIG. 6b is a block diagram of a communication device according to an embodiment of the present disclosure.

## DETAILED DESCRIPTION

The present disclosure provides a method for transmitting configuration information, a terminal, a network device, a communication system, and a medium.

According to a first aspect, the present disclosure provides a method for receiving configuration information, including: receiving, by a terminal, first configuration information and second configuration information sent by a network device, in which the first configuration information includes a first reference signal (RS) used for a supervised phase based on a model, in which the model includes an artificial intelligence (AI) model or a machine learning (ML) model, and the second configuration information includes a report configuration associated with the first RS or the first configuration information.

In the above embodiment, the terminal receives the configuration information sent by the network device to learn about the first RS and the report configuration configured for the supervised phase, so that the terminal may perform a relevant performance evaluation in a supervised phase of the model according to the first configuration information, and determine whether an evaluation result is needed to be reported according to the second configuration information, thus enabling the terminal to perform a reasonable operation in the supervised phase of the model to improve a model supervision process.

In combination with some embodiments of the first aspect, in some embodiments, a report quantity in the report configuration is configured as none.

In the above embodiment, according to the report quantity that is configured as none in the report configuration, the terminal may select to reasonably reduce reporting in the supervised phase to save a frequency and overhead of the reporting by the terminal.

In combination with some embodiments of the first aspect, in some embodiments, the model is used for prediction and/or compression of channel information, in which the channel information includes channel state information (CSI) and/or beam information.

In the above embodiment, the terminal may perform a performance supervision on a CSI prediction model in a supervised phase of a CSI-based time-domain prediction according to the configuration information of the network device, which may reasonably reduce reporting.

In combination with some embodiments of the first aspect, in some embodiments, a terminal behavior in the supervised phase includes at least one of: performing, by the terminal, channel measurement based on the first RS; obtaining, by the terminal, first comparison information according to a reference result and a corresponding model output result, in which the reference result is obtained based on the channel measurement and the corresponding model output result is obtained based on the model; determining, by the terminal, a first codeword according to the channel measurement and a codebook, in which the report configuration includes the codebook; obtaining, by the terminal, second comparison information according to the first codeword and a corresponding second codeword, in which the corresponding second codeword is a codeword determined based on the model; or comparing, by the terminal, the first comparison information and/or the second comparison information with a corresponding threshold.

In the above embodiment, in a scenario where the report quantity is configured as none in the supervised phase, main behaviors or operations of the terminal include a measurement behavior and a model supervision behavior, which is beneficial for reasonably configuring or defining a resource occupied in the supervised phase in combination with the behavior of the terminal.

In combination with some embodiments of the first aspect, in some embodiments, a threshold is configured by the network device, or defined in a protocol, or predefined by the terminal.

In the above embodiment, a relevant threshold for model supervision by the terminal may be configured or defined, so that the terminal may evaluate a performance of a prediction model based on the corresponding threshold.

In combination with some embodiments of the first aspect, in some embodiments, at least one of terminal behaviors occupies a first number of processing units.

In the above embodiment, a number of processing units occupied by the terminal in the supervised phase is illustrated, which is beneficial for determining time-domain resources required by the terminal in the supervised phase.

In combination with some embodiments of the first aspect, in some embodiments, the report configuration is periodic or semi-persistent, and a start time of a time-domain range occupied by the first number of processing units is: a start time-domain unit of a second RS; and an end time of the time-domain range occupied by the first number of processing units is: a time after an end time-domain unit of the second RS and spaced from the end time-domain unit by a processing delay of the supervised phase.

In combination with some embodiments of the first aspect, in some embodiments, the second RS is a latest first RS that is not later than a CSI reference resource.

In the above embodiment, in a scenario where a periodic or semi-persistent report configuration is defined, the terminal behavior occupies a time-domain range corresponding to the processing units, thus enabling the terminal to perform reasonable measurement or a supervision behavior within the time-domain range to obtain a relevant performance of the model.

In combination with some embodiments of the first aspect, in some embodiments, the report configuration is aperiodic, or the report configuration corresponds to a first report (initial report) of a semi-persistent report configuration, and a start time of a time-domain range occupied by the first number of processing units is: a first time-domain unit of a physical downlink control channel (PDCCH) triggering the aperiodic report or the first report; and an end time of the time-domain range occupied by the first number of processing units is a later one of: a time after the first time-domain unit and spaced from the first time-domain unit by a first time; and a time after a last time-domain unit of the first RS corresponding to a report and spaced from the last time-domain unit by a processing delay of the supervised phase, in which the report is the aperiodic report or the first report, in which the first time is greater than the processing delay.

In the above embodiment, in a scenario where an aperiodic report is defined, the terminal behavior occupies a time-domain range corresponding to the processing units.

In combination with some embodiments of the first aspect, in some embodiments, the first number satisfies at least one of: different first numbers are configured for different subcarrier spacings (SCSs); different first numbers are configured for different values of the report quantity; or different first numbers are configured for different numbers of resources of the first RS.

In the above embodiment, processing units occupied by the terminal behavior in the supervised phase may be different under different parameters to adapt to terminal behaviors under different parameters in the supervised phase.

In combination with some embodiments of the first aspect, in some embodiments, the processing delay of the supervised phase includes a processing time required for the at least one of terminal behaviors.

In the above embodiment, the processing delay in a scenario where the report quantity is configured as none in the supervised phase is defined, which is beneficial for the terminal to perform relevant measurement or a supervision operation within a reasonable processing delay in the supervised phase.

In combination with some embodiments of the first aspect, in some embodiments, the processing delay includes a second number of time-domain units.

In the above embodiment, the terminal may perform a relevant behavior in the supervised phase within a corresponding time-domain range.

In combination with some embodiments of the first aspect, in some embodiments, the processing delay and/or the second number are defined in a protocol.

In the above embodiment, a time-domain range of the processing delay may be defined via a protocol definition, and the terminal may perform a relevant supervision behavior within a reasonable time-domain range according to the protocol definition.

In combination with some embodiments of the first aspect, in some embodiments, different second numbers are configured for different SCSs.

In the above embodiment, second numbers corresponding to different SCSs may be defined, so that the terminal may perform a supervision operation within a corresponding second number of time-domain units when working under the different SCSs.

In combination with some embodiments of the first aspect, in some embodiments, the processing delay is indicated by a first field, in which the first field is a newly added field in a protocol, or is a reused field the protocol for indicating a computation delay of the channel measurement in the protocol.

In the above embodiment, when defining the processing delay, the processing delay may be clearly and effectively indicated by adding a corresponding indication field, or the processing delay may be indicated by reusing an original field to save resources.

In combination with some embodiments of the first aspect, in some embodiments, the first RS is a resource for channel measurement and/or interference measurement, and the first RS includes at least one of: a channel state information-reference signal (CSI-RS); or a synchronization signal block (SSB).

According to a second aspect, the present disclosure provides a method for sending configuration information, including: sending, by a network device, first configuration information and second configuration information to a terminal, in which the first configuration information includes a first RS used for a supervised phase based on a model, in which the model includes an AI model or an ML model, and the second configuration information includes a report configuration associated with the first RS or the first configuration information.

In combination with some embodiments of the second aspect, in some embodiments, a report quantity in the report configuration is configured as none.

In combination with some embodiments of the second aspect, in some embodiments, the model is used for prediction and/or compression of channel information, in which the channel information includes CSI and/or beam information.

In combination with some embodiments of the second aspect, in some embodiments, a terminal behavior in the supervised phase includes at least one of: performing, by the terminal, channel measurement based on the first RS; obtaining, by the terminal, first comparison information according to a reference result and a corresponding model output result, in which the reference result is obtained based on the channel measurement and the corresponding model output result is obtained based on the model; determining, by the terminal, a first codeword according to the channel measurement and a codebook, in which the report configuration includes the codebook; obtaining, by the terminal, second comparison information according to the first codeword and a corresponding second codeword, in which the corresponding second codeword is a codeword determined based on the model; or comparing, by the terminal, the first comparison information and/or the second comparison information with a corresponding threshold.

In combination with some embodiments of the second aspect, in some embodiments, a threshold is configured by the network device, or defined in a protocol, or predefined by the terminal.

In combination with some embodiments of the second aspect, in some embodiments, at least one of terminal behaviors occupies a first number of processing units.

In combination with some embodiments of the second aspect, in some embodiments, the report configuration is periodic or semi-persistent, and a start time of a time-domain range occupied by the first number of processing units is: a start time-domain unit of a second RS; an end time of the time-domain range occupied by the first number of processing units is: a time after an end time-domain unit of the second RS and spaced from the end time-domain unit by a processing delay of the supervised phase.

In combination with some embodiments of the second aspect, in some embodiments, the second RS is a latest first RS that is not later than a CSI reference resource.

In combination with some embodiments of the second aspect, in some embodiments, the report configuration is aperiodic, or the report configuration corresponds to a first report of a semi-persistent report configuration, and a start time of a time-domain range occupied by the first number of processing units is: a first time-domain unit of a PDCCH triggering the aperiodic report or the first report; and an end time of the time-domain range occupied by the first number of processing units is a later one of: a time after the first time-domain unit and spaced from the first time-domain unit by a first time; and a time after a last time-domain unit of the first RS corresponding to the report and spaced from the last time-domain unit by a processing delay of the supervised phase, in which the report is the aperiodic report or the first report, in which the first time is greater than the processing delay.

In combination with some embodiments of the second aspect, in some embodiments, the first number satisfies at least one of: different first numbers are configured for different SCSs; different first numbers are configured for different values of the report quantity; or different first numbers are configured for different numbers of resources of the first RS.

In combination with some embodiments of the second aspect, in some embodiments, the processing delay of the supervised phase includes a processing time required for the at least one of terminal behaviors.

In combination with some embodiments of the second aspect, in some embodiments, the processing delay includes a second number of time-domain units.

In combination with some embodiments of the second aspect, in some embodiments, the processing delay and/or the second number are defined in a protocol.

In combination with some embodiments of the second aspect, in some embodiments, different second numbers are configured for different SCSs.

In combination with some embodiments of the second aspect, in some embodiments, the processing delay is indicated by a first field, in which the first field is a newly added field in a protocol, or is a reused field for indicating a computation delay of the channel measurement in the protocol.

In combination with some embodiments of the second aspect, in some embodiments, the first RS is a resource for channel measurement and/or interference measurement, and the first RS includes at least one of: a CSI-RS; or an SSB.

According to a third aspect, the present disclosure provides a terminal, including: a transceiver module, configured to receive first configuration information and second configuration information sent by a network device, in which the first configuration information includes a first RS used for a supervised phase based on a model, in which the model includes an AI model or an ML model, and the second configuration information includes a report configuration associated with the first RS or the first configuration information.

According to a fourth aspect, the present disclosure provides a network device, including: a transceiver module, configured to send first configuration information and second configuration information to a terminal, in which the first configuration information includes a first RS used for a supervised phase based on a model, in which the model includes an AI model or an ML model, and the second configuration information includes a report configuration associated with the first RS or the first configuration information.

According to a fifth aspect, the present disclosure provides a terminal, including: one or more processors, in which the network device performs the method described in the first aspect.

According to a sixth aspect, the present disclosure provides a network device, including: one or more processors, in which the network device performs the method described in the second aspect.

According to a seventh aspect, the present disclosure provides a communication system, including a terminal and a network device, in which the terminal is configured to implement the method described in the first aspect, and the network device is configured to implement the method described in the second aspect.

According to an eighth aspect, the present disclosure provides a storage medium for storing instructions. When the instructions are running on a communication device, the communication device is caused to perform the method described in the first aspect or the second aspect.

According to a ninth aspect, the embodiments of the present disclosure provide a program product. When the program product is executed by a communication device, the communication device is caused to perform the method described in optional implementations of the first aspect and the second aspect.

According to a tenth aspect, the embodiments of the present disclosure provide a computer program. When the computer program is running on a computer, the computer is caused to perform the method described in optional implementations of the first aspect and the second aspect.

According to an eleventh aspect, the embodiments of the present disclosure provide a chip or a chip system. The chip or chip system includes a processing circuit, configured to perform the method described in optional implementations of the first aspect and the second aspect.

It may be understood that the terminal, the network device, the communication system, the storage medium, the program product, the computer program, the chip or the chip system are all used to perform the method provided in the embodiments of the present disclosure. Therefore, for beneficial effects that may be achieved reference may be made to the beneficial effects in the corresponding method, which will not be repeated here.

The embodiments of the present disclosure are not exhaustive and only serve as illustrations of some embodiments, but not as specific limitations to the protection scope of the present disclosure. When there is no contradiction, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, optional implementations in an embodiment may be arbitrarily combined.

Furthermore, different embodiments may be arbitrarily combined. For example, part of or all steps of different embodiments may be arbitrarily combined, and an embodiment may be arbitrarily combined with optional implementations of other embodiments.

In various embodiments of the present disclosure, unless otherwise specified and in case of a logical conflict, terms and/or descriptions are consistent in all embodiments and reference may be made to each other. Technical features from different embodiments may be combined to form a new embodiment based on their inherent logical relationships.

The terms used in the embodiments of the present disclosure are for a purpose of describing specific embodiments only and are not intended to limit the present disclosure.

In the embodiments of the present disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In the embodiments of the present disclosure, "a plurality of" means two or more.

In some embodiments, terms such as "at least one of", "one or more", "a plurality of", "multiple", etc. may be used interchangeably.

In some embodiments, expressions such as "at least one of A or B", "A and/or B", "in a case A, in another case B", and "in response to a case A, in response to another case B" in the present disclosure, depending on situations, may include at least one of the following solutions: performing A in some implementations (performing A independently of B); performing B in some implementations (performing B independently of A); selecting one of A or B for execution in some implementations (selectively performing A or B); and performing A and B in some implementations (performing both A and B). The similar principle applies when there are more options such as A, B, C, etc.

In some embodiments, expressions such as "A or B", depending on situations, may include the following technical solutions: performing A in some implementations (performing A independently of B); performing B in some implementations (performing B independently of A); and selecting one of A or B for execution in some implementations (selectively performing A or B). The similar principle applies when there are more options such as A, B, C, etc.

The terms such as "first" and "second" added in front of other words in embodiments of the present disclosure are used solely to distinguish different described objects and do not limit a position, a sequence, a priority, a quantity, or content of the described objects. For a statement regarding the described object, reference may be made to claims or descriptions in the context of embodiments and should not constitute additional restrictions due to the use of the above terms in front of other words. For example, if the described object is "field", ordinal numbers before the "field" in "first field" and "second field" do not limit a position or a sequence between fields. "First" and "second" do not limit whether modified "fields" are in the same message, nor do an order of the "first field" and the "second field." For another example, if the described object is "level", ordinal numbers before the "level" in "first level" and "second level" do not limit a priority between levels. Furthermore, a quantity of described objects is not limited by the ordinal numbers, which may be one or more. Taking "first apparatus" as an example, there may be one or more "apparatus". In addition, objects modified by different words may be the same or different. For example, if the described object is an "apparatus", "first apparatus" and "second apparatus" may be the same apparatus or different apparatuses, and their types may be the same or different. Similarly, if the described object is "information", "first information" and "second information" may be same information or different information, and their content may be the same or different.

In some embodiments, "including A", "containing A", "configured to indicate A", or "carrying A" may be interpreted as directly carrying A or indirectly indicating A.

In some embodiments, terms such as "in response to...", "in response to determining...", "in a case that...", "when...", "if..." etc. may be used interchangeably.

In some embodiments, the terms such as "greater than", "greater than or equal to", "not less than", "more than", "more than or equal to", "no less than", "higher than", "higher than or equal to", "not lower than", "above", etc. may be used interchangeably. The terms such as "less than", "less than or equal to", "not greater than", "fewer than", "fewer than or equal to", "no more than", "lower than", "lower than or equal to", "not higher than", "below" etc. may also be used interchangeably.

In some embodiments, "device" and "apparatus" may be interpreted as either physical or virtual. Names are not limited to those recorded in embodiments. In some cases, they may be understood as "equipment", "device", "circuit", "network element", "node", "function", "unit", "section", "system", "network", "chip", "chip system", "entity", "subject", etc.

In some embodiments, "network" may be interpreted as a device included in the network, for example, an access network device, a core network device, etc.

In some embodiments, "access network device (AN device)" may also be called "radio access network device (RAN device)", "base station (BS)", "radio base station", "fixed station", and in some embodiments may also be understood as "node", "access point", "transmission point (TP)", "reception point (RP)", "transmission/-reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc.

In some embodiments, "terminal" or "terminal device" may be called "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the present disclosure may be implemented as an independent embodiment. Any combination of elements, rows, or columns may also be implemented as an independent embodiment.

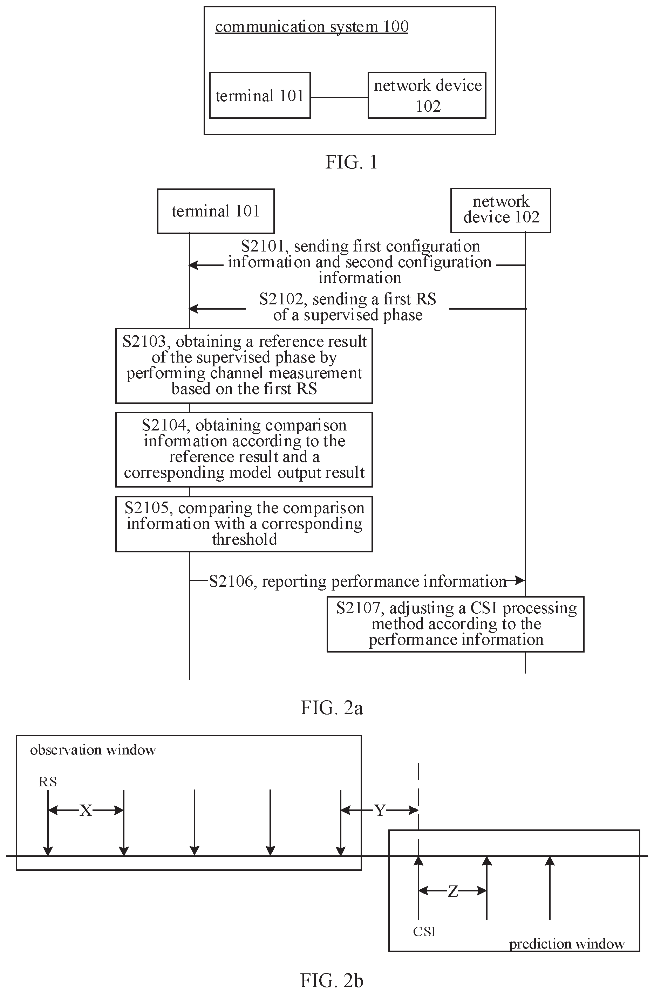

FIG. 1 is a schematic diagram of an architecture of a communication system according to an embodiment of the present disclosure.

As shown in FIG. 1, a communication system 100 may include a terminal 101 and a network device 102.

In some embodiments, the terminal 101 includes, for example, at least one of a mobile phone, a wearable device, an Internet of Things device, or a car with a communication function, a smart car, and a Pad, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some embodiments, the network device 102 may include at least one of an access network device or a core network device.

In some embodiments, the access network device is, for example, a node or device that connects the terminal to a wireless network. The access network device may include at least one of an evolved NodeB (eNB) in a 5th generation (5G) communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in other communication systems, an access node in a wireless fidelity (WiFi) system, which is not limited herein.

In some embodiments, the technical solution of the present disclosure may be applied to an Open RAN architecture. In this case, an interface between access network devices or within the access network device involved in the embodiments of the present disclosure may become an internal interface of the Open RAN. Processes and information interactions across these internal interfaces may be implemented via software or programs.

In some embodiments, the access network device may be composed of a central unit (CU) and distributed units (DUs). The CU may also be referred to as a control unit. The use of CU-DU structure allows to divide a protocol layer of the access network device, such that part of protocol layer functions are placed in the CU for centralized control, and part of or all of the remaining protocol layer functions are distributed in the DUs, and the DUs are centrally controlled by the CU, which is not limited herein.

In some embodiments, the core network device may be a device including one or more network elements, or may be a plurality of devices or device groups, each of which includes all or part of the one or more network elements. The network elements may be virtual or physical. The core network includes, for example, at least one of an evolved packet core (EPC), a 5G core network (5GCN), or a next generation core (NGC). Or, the core network device refers to a network element with a specific function, such as an access management function (AMF), a service management function (SMF), etc.

It may be understood that the communication system in the embodiments of the present disclosure is to clearly illustrate the technical solution of embodiments of the present disclosure, and does not constitute a limitation on the technical solution in embodiments of the present disclosure. Those skilled in the art may know, with evolution of the system architecture and emergence of new service scenarios, the technical solutions in the embodiments of the present disclosure are also applicable to similar technical problems.

The following embodiments of the present disclosure may be applied to the communication system 100 shown in FIG. 1, or to some entities, which are not limited herein.

Entities in FIG. 1 are illustrative. The communication system may include all or part of the entities in FIG. 1, or may include other entities not shown in FIG. 1. The entities may be in any number and in any form. Connections between the entities are illustrative. The entities may be unconnected or may be connected. They may be connected in any manner, for example, they may be directly connected or indirectly connected, or may be connected via a wired or wireless way.

The embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM®), CDMA2000, ultra mobile broadband (UMB), IEEE 802.11 (Wi-Fi®), IEEE 802.16 (WiMAX®), IEEE 802.20, ultra-wideband (UWB), Bluetooth®, public land mobile network (PLMN), device-to-device (D2D) system, machine to machine (M2M) system, Internet of Things (IoT) system, Vehicle-to-Everything (V2X), systems using other communication methods, next-generation systems based on them, etc. In addition, the combination of a plurality of systems (e.g., the combination of LTE or LTE-A with 5G) may be applied.

In the embodiments of the present disclosure, AI-based channel information enhancement includes AI-based CSI compression feedback, an AI-based CSI time-domain prediction, and an AI-based beam information spatial-domain prediction or time-domain prediction.

In different applications above, required data or information may be obtained by using an AI-based model or an ML-based model. To supervise a performance of the model, it is necessary to reasonably configure or define a relevant terminal behavior, a report configuration, and a processing delay in the supervised phase of the model to ensure that a better model may be obtained. For example, taking a CSI time-domain prediction as an example, there is a scenario where the network device 102 does not configure or send a signal required for the supervised phase of the model, which affects model supervision. In the embodiments of the present disclosure, a method for configuring an RS in a supervised phase and a method for defining a processing delay in the scenario are provided.

FIG. 2a is an illustrative interaction diagram of a method for transmitting configuration information according to an embodiment of the present disclosure. As shown in FIG. 2a, embodiments of the present disclosure relate to a method for transmitting configuration information. The method includes steps at S2101 to S2107.

At S2101, the network device 102 sends first configuration information and second configuration information to the terminal 101.

In some embodiments, the first configuration information includes a first RS used for a supervised phase based on a model, in which the model includes an AI model or an ML model.

In some embodiments, an AI-based model or an ML-based model is used for prediction and/or compression of channel information, in which the channel information includes CSI and/or beam information.

Optionally, the beam information includes a beam identifier (ID) and/or a beam quality. The beam ID may also be represented by transmission configuration indicator (TCI), quasi co-located (QCL), or spatial information ID, etc. The beam quality may be represented by reference signal received power (RSRP), reference signal received quality (RSRQ), or signal to interference plus noise ratio (SINR), etc.

In some embodiments, the model may be used for at least one of: CSI compression feedback, a CSI time-domain prediction (or CSI prediction), or a beam information spatial-domain prediction or time-domain prediction.

Optionally, taking AI-based CSI compression feedback as an example, in this use case, an AI model is used to compress CSI information to be fed back, which may reduce feedback overhead while ensuring an accuracy of the information that is to be fed back. Generally, an encoder part of the model is deployed on a terminal side, and a decoder part of the model is deployed on a network (NW) side. To supervise the performance of the model, a decoder-like part for model monitoring may be deployed on the terminal side. In the supervised phase of the model, the terminal obtains a comparison result by comparing CSI from the channel measurement and CSI recovered by the decoder-like part.

Optionally, taking an AI-based beam information spatial-domain prediction as an example, in this use case, different beams are sent via different RS resources. When a number of beams is large, the network device needs to send a large number of RS resources, and the terminal needs to measure the large number of RS resources to select one or more beams with a good quality. Using the AI model, beam qualities of other unmeasured beams may be predicted via a beam spatial-domain prediction based on measurements of only a small number of RSs, which effectively reduces transmission overhead of the RS and measurement complexity and power consumption of the terminal. To supervise the performance of the model, in the supervised phase of the model, best X beams selected by the terminal by measuring all beams at a certain time may be compared with best X beams obtained by the terminal based on measurement of a small number of beams and an AI model prediction, to determine whether the model may predict the beam information well.

Optionally, taking an AI-based beam information time-domain prediction as an example, in this use case, the terminal uses an AI model to predict a future beam quality via a beam time-domain prediction way based on known historical beam information. To supervise the model performance, in the supervised phase of the model, beams selected by the terminal based on measurement at a certain time may be compared with beam information predicted by the terminal for the time based on historical beam information, to determine whether the model may predict the beam information well.

Optionally, taking an AI-based CSI time-domain prediction as an example, the terminal may use an AI model to predict future CSI based on historical CSI, thus reducing RS resources configured by the network device 102. For example, referring to FIG. 2b, in an AI-based or ML-based CSI prediction, an observation window and a prediction window may be used to define different CSI.

Within the observation window, the network device 102 may send a CSI reference signal (CSI-RS), and the terminal 101 measures the CSI-RS within the observation window to obtain a measurement result such as measured CSI (i.e., historical CSI). The terminal 101 inputs the measurement result that is preprocessed into a prediction model to obtain a prediction result such as predicted CSI (i.e., future CSI) within the prediction window. In a performance monitoring or supervised phase of the prediction model, the terminal 101 needs to calculate a metric (or key performance indicator (KPI)) in the supervised phase based on measurement to determine or verify whether the prediction model is suitable for a current channel or whether the prediction model is accurate.

Referring to FIG. 2b, some important parameters are involved in the CSI prediction. The observation window includes M measured CSI samples, and the prediction window includes N predicted CSI samples, where M and N are positive integers. A time interval between adjacent measured CSI samples in the observation window is X, a time interval between first predicted CSI sample in the prediction window and last measured CSI sample in the observation window is Y, and a time interval between adjacent predicted CSI samples in the prediction window is Z. X, Y, and Z are in units of time-domain units. A time-domain unit may be a slot, a half-slot, a sub-slot, or a symbol. Taking the slot as an example, the time interval may be a number of slots under a certain SCS. A sample interval for prediction and a predicted CSI interval may be different. Correspondingly, in FIG. 2b, a sample interval in the observation window may be considered as a CSI-RS interval, and the network device 102 may configure corresponding CSI report or a report time according to the CSI interval in the observation window.

In some embodiments, the first RS configured by the first configuration information may be used for measurement in the supervised phase of any one of the above models.

Optionally, the first RS may also be referred to as monitor-RS.

In some embodiments, the first configuration information may be a CSI resource configuration and may include a CSI resource set.

In some embodiments, the first RS is a resource for channel measurement and/or interference measurement, and the first RS includes at least one of: a CSI-RS; or an SSB.

In some embodiments, the second configuration information includes a report configuration associated with the first RS or the first configuration information.

Optionally, the second configuration information may be a CSI report setting or a CSI report configuration.

In some embodiments, a report quantity in the report configuration is configured as none.

Optionally, the report quantity being configured as none means, for example, that the report quantity corresponding to a report configuration associated with the monitor-RS is configured as "none". When the report quantity is configured as none, it indicates that the terminal may not report information of the supervised phase, such as comparison information or a comparison result. In some embodiments, the terminal may perform a plurality of CSI comparisons within a certain time and does not need to report CSI comparison information each time. Only when a number of times that a value of the comparison information is less than a threshold exceeds a certain count threshold does the terminal report corresponding information to the network device 102, as described in S2106.

In some embodiments, the terminal 101 receives the first configuration information and the second configuration information.

In some embodiments, the first configuration information and the second configuration information are sent via an RRC signaling.

At S2102, the network device 102 sends a first RS of a supervised phase to the terminal 101.

In some embodiments, a relevant time-frequency parameter for sending the first RS by the network device 102 may be indicated by the first configuration information.

In some embodiments, the terminal 101 receives and measures the first RS.

At S2103, the terminal 101 obtains a reference result of the supervised phase by performing channel measurement based on the first RS.

In some embodiments, the reference result may refer to measured CSI or reference CSI obtained by the terminal 101 via the channel measurement based on the first RS.

Optionally, the reference CSI may be channel matrix information, channel eigenvector information, or codeword information known according to a specific codebook. The channel eigenvector information may be a matrix eigenvector obtained by performing SVD decomposition on the channel matrix information.

Optionally, the terminal determines a first codeword according to a codebook and the channel measurement based on the first RS. The report configuration includes the codebook. For example, the codebook may be an eTypeII codebook.

At S2104, the terminal 101 obtains comparison information according to the reference result and a corresponding model output result.

In some embodiments, the terminal 101 may obtain the model output result based on a relevant model shown above, and compare the reference result with the corresponding model output result to obtain corresponding comparison information, which facilitates model supervision.

Optionally, taking a model used for a CSI-based prediction model as an example, the model output result may be a prediction result such as the predicted CSI, which includes the channel matrix information, the channel eigenvector information, or the codeword information known according to the specific codebook.

In some embodiments, the terminal 101 obtains the first comparison information according to the reference result and the corresponding model output result. The reference result is obtained based on the channel measurement, and the corresponding model output result is obtained based on the model.

Optionally, the first comparison information may indicate a difference between the predicted CSI such as predicted channel matrix information and the reference CSI such as reference channel matrix information.

In some embodiments, the terminal obtains the first comparison information according to measured channel matrix information and the predicted channel matrix information.

In some embodiments, the terminal determines eigenvector information of the measured channel based on the measured channel matrix information and compares the eigenvector information with eigenvector information of the predicted channel to obtain the first comparison information.

In some embodiments, the terminal determines the second comparison information according to the first codeword and a corresponding second codeword. The corresponding second codeword is a codeword determined based on the model.

Optionally, the second comparison information may indicate a difference between a predicted codeword and a reference codeword obtained via measurement in the supervised phase.

In some embodiments, the first comparison information or the second comparison information includes at least one of: a normalized mean square error (NMSE), in which the NMSE may include a mean square error (MSE); or a square of generalized cosine similarity (SGCS), in which the SGCS may include a generalized cosine similarity (GCS) and an RSRP difference.

In a first example, taking a model used for the CSI prediction as an example, optionally, the terminal may calculate an NMSE or an SGCS between the predicted channel matrix information and the reference channel matrix information.

Optionally, the terminal may calculate an NMSE or an SGCS between the predicted channel eigenvector information and the reference channel eigenvector information.

Optionally, the terminal may calculate an NMSE or an SGCS between the first codeword and the corresponding second codeword.

In a second example, taking a model used for the CSI compression feedback as an example, optionally, the terminal may calculate an NMSE or an SGCS between decompressed and recovered channel matrix information and measured channel matrix information.

Optionally, the terminal may calculate an NMSE or an SGCS between decompressed and recovered channel eigenvector information and measured channel eigenvector information.

Optionally, the terminal may calculate an NMSE or an SGCS between the first codeword and the corresponding second codeword.

In a third example, taking a model used for a beam information spatial-domain prediction as an example, optionally, the terminal may calculate an RSRP difference between predicted best K beams and measured best K beams.

It needs to be noted that, in the embodiments of the present disclosure, the CSI prediction model is deployed on the terminal 101 side, and a KPI calculation in the supervised phase is performed by the terminal 101 side. In other embodiments, the KPI may also be calculated by the network side.

At S2105, the terminal 101 compares the comparison information with a corresponding threshold.

In some embodiments, the corresponding threshold may be defined for different comparison information, and the terminal compares the first comparison information and/or the second comparison information with the corresponding threshold.

For example, an NMSE threshold or an SGCS threshold corresponding to the comparison information of the channel matrix information is: a first NMSE or a first SGCS. The terminal 101 compares the first comparison information with the first NMSE or the first SGCS to determine whether a corresponding reporting trigger event is met.

As another example, an NMSE threshold or an SGCS threshold corresponding to comparison information of the codeword is: a second NMSE or a second SGCS. The terminal 101 compares the second comparison information with the second NMSE or the second SGCS to determine whether a corresponding reporting trigger event is met.

In some embodiments, the terminal may perform a plurality of CSI comparisons within a certain time and does not need to report the CSI comparison information each time. Only when a number of times that a value of the comparison information is less than a threshold exceeds a certain count threshold does the terminal report corresponding information to the network device 102, as described in S2106.

In some embodiments, the threshold is configured by the network device, defined by a protocol, or predefined by the terminal.

In some embodiments, for behaviors of the terminal 101 in the supervised phase reference may be made to the descriptions of S2103 to S2105.

Optionally, in the supervised phase, at least one of terminal behaviors occupies a first number of processing units.

For example, the first number may be denoted as N.

For example, the processing unit may be a CSI processing unit (CPU), or an AI processing unit.

Optionally, N CPUs occupy a certain time-domain range or duration range. The following embodiments illustrate a start time and an end time of a duration occupied by the N CPUs.

In one example, in a case that the report configuration is periodic or semi-persistent, a start time of a time-domain range occupied by the first number of processing units is: a start time-domain unit of a second RS; and an end time of the time-domain range occupied by the first number of processing units is: a time after an end time-domain unit of the second RS and spaced from the end time-domain unit by a processing delay of the supervised phase.

Optionally, the second RS may be one of first RSs used in the supervised phase to obtain the reference CSI.

For example, taking the terminal 101 measuring the first RS in the supervised phase to obtain a certain instance of reference CSI, the second RS may be the first RS used to obtain the certain instance of reference CSI.

Optionally, when the report configuration or CSI reporting has a corresponding CSI reference resource, the second RS is a latest first RS that is not later than a CSI reference resource.

Optionally, the time-domain unit may be a millisecond (ms), microsecond (us), nanosecond (ns), slot, sub-slot, symbol, etc.

In this example, taking the time-domain unit as a symbol, a start time corresponding to N processing units may be a start symbol of the second RS (i.e., the earliest symbol occupied by the second RS), and an end time may be (S1+T), which is after an end symbol S1 of the second RS (i.e., the last symbol occupied by the second RS), and separated from the end symbol by a processing delay T.

Optionally, the terminal 101 may obtain a measurement result based on a first RS before the CSI reference resource, and the second RS is a first RS that is before the CSI reference resource and closest in a time-domain position to the CSI reference resource.

It needs to be noted that this example is not applicable to a first report (initial report) of a semi-persistent report configuration.

In another example, in a case that the report configuration is aperiodic, or the report configuration corresponds to the first report of the semi-persistent report configuration, a start time of a time-domain range occupied by the first number of processing units is: a first time-domain unit of a PDCCH triggering an aperiodic report or the first report; and an end time of the time-domain range occupied by the first number of processing units is a later one of: a time after the first time-domain unit and spaced from the first time-domain unit by a first time X; and a time after a last time-domain unit of the first RS corresponding to report and spaced from the last time-domain unit by a processing delay of the supervised phase, in which the first time is greater than the processing delay T.

Optionally, the report is the aperiodic report or the first report; and the first RS corresponding to the above reporting may be a first RS corresponding to the aperiodic report or a first RS corresponding to the first report. The end time is after the last time-domain unit occupied by the first RS.

Optionally, taking the time-domain unit as a symbol, a start time corresponding to N processing units may be a first symbol S2 of a PDCCH triggering the aperiodic report or the first report; and an end time may be a later time between (S2+X) and (S3+T (which is the last symbol occupied by the first RS)) in the time domain.

Optionally, the first report is: a first report of the semi-persistent report configuration transmitted on a physical uplink shared channel (PUSCH) triggered by the PDCCH.

Optionally, the first time includes a time for the terminal to demodulate DCI transmitted on the PDCCH and the processing delay T of the supervised phase.

In some embodiments, the first number satisfies at least one of: different first numbers are configured for different SCSs; different first numbers are configured for different values of the report quantity; or different first numbers are configured for different numbers of resources of the first RS.

Optionally, different N values correspond to different SCSs; or different values of report quantities correspond to different N values; or different resource numbers of the first RS correspond to different N values.

In some embodiments, the processing delay T of the supervised phase includes a processing time required for the at least one of terminal behaviors.

Optionally, the processing delay of the supervised phase may also be referred to as a computation delay, and may be denoted as CSI computation time.

Optionally, the processing delay may include at least one of: a time for the terminal to perform channel measurement based on the first RS; a time for the terminal to obtain first comparison information according to a reference result and a corresponding model output result; a time for the terminal to determine the first codeword according to the channel measurement and the codebook; a time for the terminal to obtain the second comparison information according to the first codeword and the corresponding second codeword; or a time for the terminal to compare the first comparison information and/or the second comparison information with the corresponding threshold.

Optionally, the processing delay includes a second number of time-domain units.

The time-domain unit may be a millisecond, slot, symbol, etc. For example, the processing delay includes T symbols.

Optionally, the processing delay and/or the second number are defined by a protocol.

Optionally, different second numbers are configured for different SCSs. For example, different SCSs correspond to different T values.

In some embodiments, the processing delay is indicated by a first field, in which the first field is a newly added field in a protocol, or is a reused field for indicating a computation delay of the channel measurement in the protocol.

Optionally, the first field is the newly added field in the protocol, for example: CSI computation delay requirement, indicating processing delays $Z_4$ and $Z_4'$.

Optionally, the first field is the reused field for indicating a computation delay of the channel measurement in the protocol, for example, reusing CSI computation delay requirement, indicating processing delays $Z_2$ and $Z_2'$.

It needs to be noted that, in some comparison examples, CSI processing delays under specific conditions are defined, such as processing delays $Z_3'$, $Z_3$, $Z_1'$, $Z_1'$, etc. The CSI processing delay is related to a beam switching capability of the terminal, and is a delay caused by the terminal measuring an RSRP for a beam selection, which is different from the processing delay in the embodiments of the present disclosure. The specific condition may be that the report configuration is configured as none and the RS is not configured as a tracking reference signal (TRS).

At S2106, the terminal 101 reports performance information to the network device 102 when a trigger event is met.

In some embodiments, the terminal 101 reports the performance information of the prediction model only when the trigger event is met, and does not need to report a measured reference result in the supervised phase each time, thus reducing a frequency and overhead of the reporting by the terminal.

In some embodiments, at S2105, the terminal may perform a plurality of CSI comparisons within a certain time and does not need to report the CSI comparison information each time. Only when a number of times that a value of the comparison information is less than a threshold exceeds a certain count threshold does the terminal report corresponding information to the network device 102.

Optionally, the terminal sends following indication information, such as an AI model bad performance indicator or an AI model change request.

In some embodiments, the performance information may be used to request the network device 102 to adjust a CSI processing method.

In some embodiments, the network device 102 receives the performance information. Based on the indication information from the terminal, the network device 102 may further indicate the terminal to fall back to a traditional mode or switch to other prediction models. Reference may be made to the description of S2107.

At S2107, the network device 102 adjusts the CSI processing method according to the performance information.

In some embodiments, according to the performance information, when the performance information indicates that a prediction effect of an AI-based or ML-based CSI prediction model is not accurate, the network device 102 may decide to fall back to codebook-based CSI reporting, or upgrade to other CSI prediction models for prediction, thus ensuring an accuracy of obtained CSI.

In some embodiments, names of information and other elements are not limited to those recorded in the embodiments. Terms such as "information", "message", "signal", "signaling", "report", "configuration", "indication", "instruction", "command", "channel", "parameter", "domain", "field", etc., may be used interchangeably.

In some embodiments, "acquire", "obtain", "get", "receive", "transmit", "bidirectional transmission", "send and/or receive" may be used interchangeably, and they may be interpreted as receiving from another entity, obtaining from a protocol, obtaining from a higher layer, obtaining via processing by itself, autonomously implementing, and other meanings.

In some embodiments, terms such as "send", "report", "deliver", "transmit", "bidirectional transmission", "send and/or receive" may be used interchangeably.

In some embodiments, terms such as "uplink", "physical uplink", etc. may be used interchangeably. Terms such as "downlink", "physical downlink", etc. may be used interchangeably. Terms such as "sidelink", "sidelink communication", "direct link", "direct communication", "direct link communication", etc. may be used interchangeably.

In some embodiments, terms such as "downlink control information (DCI)", "downlink (DL) assignment", "DL DCI", "uplink (UL) grant", "UL DCI", etc. may be used interchangeably.

In some embodiments, terms such as "physical downlink shared channel (PDSCH)", "DL data", etc. may be used interchangeably. Terms such as "physical uplink shared channel (PUSCH)", "UL data", etc. may be used interchangeably.

In some embodiments, terms such as "component carrier (CC)", "cell", "frequency carrier", "carrier frequency", etc. may be used interchangeably.

In some embodiments, terms such as "certain", "predetermined" "preset", "set", "indicated", "a/an", "any", "first", etc. may be used interchangeably. "certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited herein.

In some embodiments, determination or judgment may be performed using a value represented by 1 bit (0 or 1), or using a boolean value represented by true or false, or by numerical comparison (e.g., comparison with a predetermined value), which is not limited herein.

In some embodiments, "does not expect to receive" may be interpreted as not receiving on a time-domain resource and/or a frequency-domain resource, or as not performing subsequent processing on received data after receiving the data; and "does not expect to send" may be interpreted as not sending, or as sending but not expecting a receiver to respond to content that is sent.

The communication method in the embodiments of the present disclosure may include at least one of S2101 to S2107. For example, S2101 may be implemented as an independent embodiment, S2101 to S2102 may be implemented as an independent embodiment, and S2101 to S2103 may be implemented as an independent embodiment, which is not limited herein.

In some embodiments, S2102, S2103, S2104, S2105, S2106, and S2107 are optional. In different embodiments, one or more of these steps may be omitted or replaced.

In some embodiments, reference may be made to other optional implementations recorded before or after the description corresponding to FIG. 2a.

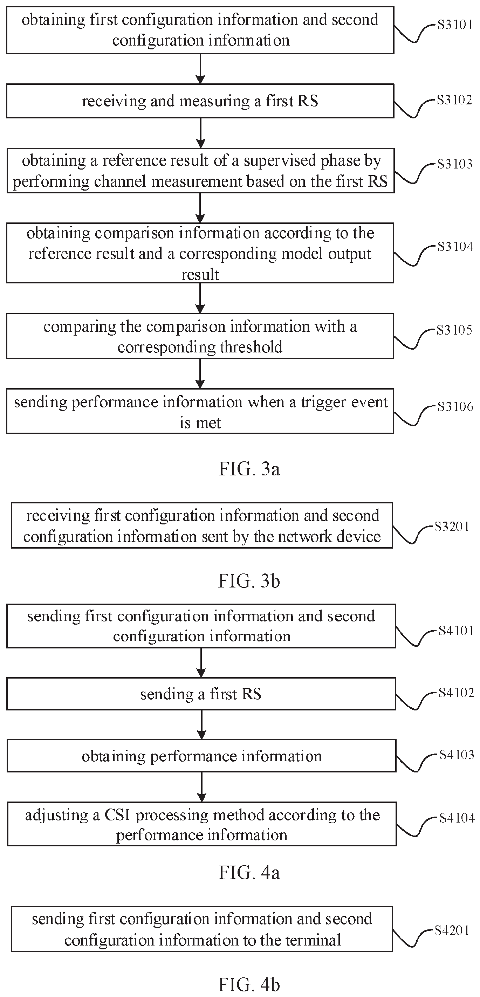

FIG. 3a is a schematic diagram of a method for receiving configuration information according to an embodiment of the present disclosure. As shown in FIG. 3a, embodiments of the present disclosure relate to a method for receiving configuration information, performed by the terminal 101. The above method includes steps at S3101 to S3106.

At S3101, the terminal 101 obtains first configuration information and second configuration information.

In some embodiments, for an implementation of S3101, reference may be made to the relevant implementation of S2101 corresponding to FIG. 2a, which will not be repeated here.

In some embodiments, the terminal 101 may obtain the above configuration information from the network device 102 or other entities.

At S3102, the terminal 101 receives and measures a first RS.

In some embodiments, for an implementation of S3102, reference may be made to the relevant implementation of S2102 corresponding to FIG. 2a, which will not be repeated here.

At S3103, the terminal 101 obtains a reference result of a supervised phase by performing channel measurement based on the first RS.

In some embodiments, for an implementation of S3103, reference may be made to the relevant implementation of S2103 corresponding to FIG. 2a, which will not be repeated here.

At S3104, the terminal 101 obtains comparison information according to the reference result and a corresponding model output result.

In some embodiments, for an implementation of S3104, reference may be made to the relevant implementation of S2104 corresponding to FIG. 2a, which will not be repeated here.

At S3105, the terminal 101 compares the comparison information with a corresponding threshold.

In some embodiments, for an implementation of S3105, reference may be made to the relevant implementation of S2105 corresponding to FIG. 2a, which will not be repeated here.

At S3106, the terminal 101 sends performance information when a trigger event is met.

In some embodiments, for an implementation of S3106, reference may be made to the relevant implementation of S2106 corresponding to FIG. 2a, which will not be repeated here.

The communication method in the embodiments of the present disclosure may include at least one of S3101 to S3106. For example, S3101 may be implemented as an independent embodiment, S3101 to S3102 may be implemented as an independent embodiment, and S3101 to S3103 may be implemented as an independent embodiment, which is not limited herein.

In some embodiments, S3102, S3103, S3104, S3105, and S3106 are optional. In different embodiments, one or more of these steps may be omitted or replaced.

In some embodiments, reference may be made to other optional implementations recorded before or after the description corresponding to FIG. 3a.

FIG. 3b is a schematic diagram of a method for receiving configuration information according to an embodiment of the present disclosure. As shown in FIG. 3b, embodiments of the present disclosure relate to a method for receiving configuration information, performed by the terminal 101. The above method includes a step at S3201.

At S3201, the terminal 101 receives first configuration information and second configuration information sent by the network device 102.

In some embodiments, for an implementation of S3201, reference may be made to the relevant implementation of S2101 corresponding to FIG. 2a, which will not be repeated here.

In some embodiments, the first configuration information includes a first RS used for a supervised phase based on a model, in which the model includes an AI model or an ML model.

In some embodiments, the second configuration information includes a report configuration associated with the first RS or the first configuration information.

In some embodiments, a report quantity in the report configuration is configured as none.

In some embodiments, the model is used for prediction and/or compression of channel information, in which the channel information includes CSI and/or beam information.

In some embodiments, a terminal behavior in the supervised phase includes at least one of: performing, by the terminal, channel measurement based on the first RS; obtaining, by the terminal, first comparison information according to a reference result and a corresponding model output result, in which the reference result is obtained based on the channel measurement and the corresponding model output result is obtained based on the model; determining, by the terminal, a first codeword according to the channel measurement and a codebook, in which the report configuration includes the codebook; obtaining, by the terminal, second comparison information according to the first codeword and a corresponding second codeword, in which the corresponding second codeword is a codeword determined based on the model; or comparing, by the terminal, the first comparison information and/or the second comparison information with a corresponding threshold.

Optionally, a threshold is configured by the network device, or defined in a protocol, or predefined by the terminal.

In some embodiments, at least one of terminal behaviors occupies a first number of processing units.

In one example, the report configuration is periodic or semi-persistent, and a start time of a time-domain range occupied by the first number of processing units is: a start time-domain unit of a second RS; and an end time of the time-domain range occupied by the first number of processing units is: a time after an end time-domain unit of the second RS and spaced from the end time-domain unit by a processing delay of the supervised phase, in which the second RS is a latest first RS that is not later than a CSI reference resource.

In another example, the report configuration is aperiodic, or the report configuration corresponds to a first report of a semi-persistent report configuration, and a start time of a time-domain range occupied by the first number of processing units is: a first time-domain unit of a PDCCH triggering an aperiodic report or the first report; and an end time of the time-domain range occupied by the first number of processing units is a later one of: a time after the first time-domain unit and spaced from the first time-domain unit by a first time; and a time after a last time-domain unit of the first RS corresponding to the report and spaced from the last time-domain unit by a processing delay of the supervised phase, in which the report is the aperiodic report or the first report, in which the first time is greater than the processing delay.

Optionally, the first number satisfies at least one of: different first numbers are configured for different SCSs; different first numbers are configured for different values of the report quantity; or different first numbers are configured for different numbers of resources of the first RS.

In some embodiments, the processing delay of the supervised phase includes a processing time required for the at least one of terminal behaviors.

Optionally, the processing delay includes a second number of time-domain units.

Optionally, the processing delay and/or the second number are defined in the protocol.

Optionally, different second numbers are configured for different SCSs.

Optionally, the processing delay is indicated by a first field, in which the first field is a newly added field in the protocol, or is a reused field for indicating a computation delay of the channel measurement in the protocol.

In some embodiments, the first RS is a resource for channel measurement and/or interference measurement, and the first RS includes at least one of: a CSI-RS; or an SSB.

In some embodiments, reference may be made to other optional implementations recorded before or after the description corresponding to FIG. 3b.

FIG. 4a is a schematic diagram of a method for sending configuration information according to an embodiment of the present disclosure. As shown in FIG. 4a, embodiments of the present disclosure relate to a method for sending configuration information, performed by the network device 102. The above method includes steps at S4101 to S4104.

At S4101, the network device 102 sends first configuration information and second configuration information.

In some embodiments, for an implementation of S4101, reference may be made to the relevant implementation of S2101 corresponding to FIG. 2a, which will not be repeated here.

In some embodiments, the network device 102 may send the above configuration information to the terminal 101 or other entities.

At S4102, the network device 102 sends a first RS.

In some embodiments, for an implementation of S4102, reference may be made to the relevant implementation of S2102 corresponding to FIG. 2a, which will not be repeated here.

At S4103, the network device 102 obtains performance information.

In some embodiments, for an implementation of S4103, reference may be made to the relevant implementation of S2106 corresponding to FIG. 2a, which will not be repeated here.

At S4104, the network device 102 adjusts a CSI processing method according to the performance information.

In some embodiments, for an implementation of S4104, reference may be made to the relevant implementation of S2107 corresponding to FIG. 2a, which will not be repeated here.

The communication method in the embodiments of the present disclosure may include at least one of S4101 to S4104. For example, S4101 may be implemented as an independent embodiment, S4101 to S4102 may be implemented as an independent embodiment, and S4101 to S4103 may be implemented as an independent embodiment, which is not limited herein.

In some embodiments, S4102, S4103, and S4104 are optional. In different embodiments, one or more of these steps may be omitted or replaced.

In some embodiments, reference may be made to other optional implementations recorded before or after the description corresponding to FIG. 4a.

FIG. 4b is a schematic diagram of a method for sending configuration information according to an embodiment of the present disclosure. As shown in FIG. 4b, embodiments of the present disclosure relate to a method for sending configuration information, performed by the network device 102. The above method includes a step at S4201.

At S4201, the network device 102 sends first configuration information and second configuration information to the terminal 101.

In some embodiments, for an implementation of S4201, reference may be made to the relevant implementation of S2101 corresponding to FIG. 2a, which will not be repeated here.

In some embodiments, the first configuration information includes a first RS used for a supervised phase based on a model, in which the model includes an AI model or an ML model.

In some embodiments, the second configuration information includes a report configuration associated with the first RS or the first configuration information.

In some embodiments, a report quantity in the report configuration is configured as none.

In some embodiments, the model is used for prediction and/or compression of channel information, in which the channel information includes CSI and/or beam information.

In some embodiments, a terminal behavior in the supervised phase includes at least one of: performing, by the terminal, channel measurement based on the first RS; obtaining, by the terminal, first comparison information according to a reference result and a corresponding model output result, in which the reference result is obtained based on the channel measurement and the corresponding model output result is obtained based on the model; determining, by the terminal, a first codeword according to the channel measurement and a codebook, in which the report configuration includes the codebook; obtaining, by the terminal, second comparison information according to the first codeword and a corresponding second codeword, in which the corresponding second codeword is a codeword determined based on the model; or comparing, by the terminal, the first comparison information and/or the second comparison information with a threshold.

Optionally, the threshold is configured by the network device, or defined in a protocol, or predefined by the terminal.

In some embodiments, at least one of terminal behaviors occupies a first number of processing units.

In one example, the report configuration is periodic or semi-persistent, and a start time of a time-domain range occupied by the first number of processing units is: a start time-domain unit of a second RS; an end time of the time-domain range occupied by the first number of processing units is: a time after an end time-domain unit of the second RS and spaced from the end time-domain unit by a processing delay of the supervised phase.

Optionally, the second RS is a latest first RS that is not later than a CSI reference resource.

In another example, the report configuration is aperiodic, or the report configuration corresponds to a first report of a semi-persistent report configuration, and a start time of a time-domain range occupied by the first number of processing units is: a first time-domain unit of a PDCCH triggering the aperiodic report or the first report; and an end time of the time-domain range occupied by the first number of processing units is a later one of: a time after the first time-domain unit and spaced from the first time-domain unit by a first time; and a time after a last time-domain unit of the first RS corresponding to the report and spaced from the last time-domain unit by a processing delay of the supervised phase, in which the reporting is the aperiodic report or the first report, in which the first time is greater than the processing delay.

Optionally, the first number satisfies at least one of: different first numbers are configured for different SCSs; different first numbers are configured for different values of the report quantity; or different first numbers are configured for different numbers of resources of the first RS.

In some embodiments, the processing delay of the supervised phase includes a processing time required for the at least one of terminal behaviors.

Optionally, the processing delay includes a second number of time-domain units.

Optionally, the processing delay and/or the second number are defined in the protocol.

Optionally, different second numbers are configured for different SCSs.

Optionally, the processing delay is indicated by a first field, in which the first field is a newly added field in the protocol, or is a reused field for indicating a computation delay of the channel measurement in the protocol.

In some embodiments, the first RS is a resource for channel measurement and/or interference measurement, and the first RS includes at least one of: a CSI-RS; or an SSB.

In some embodiments, reference may be made to other optional implementations recorded before or after the description corresponding to FIG. 4b.

To facilitate understanding of the embodiments of the present disclosure, some specific examples are listed below.

The present disclosure aims to provide a new definition for a processing delay and a number of CPUs in a supervised stage of an AI-based channel enhancement model.

Example one:

A report quantity corresponding to a report setting associated with an RS configured as the monitor-RS is "none".

Example two:

The monitor RS may be a CSI-RS or an SSB.
The CSI processing delay or the CSI computation time includes at least one of: a time for measuring a channel based on the monitor-RS, for example, obtaining a channel matrix; a time for comparing a measured channel matrix with a predicted channel matrix, such as calculating an SGCS or an NMSE between the two channel matrices; a time for calculating an eigenvector based on a measured channel matrix; a time for comparing a measured eigenvector with a predicted eigenvector, such as calculating an SGCS or an NMSE between the two eigenvectors; a time for calculating an eTypeII codeword based on a measured channel according to a codebook configuration in the CSI report setting, for example, an eTypeII codebook; a time for comparing a measured eTypeII codeword with a reported predicted eTypeII codeword, such as calculating an SGCS or an NMSE between the two codewords; or a time for comparing an SGCS or an NMSE with an RRC-configured or predefined threshold.

Example three:

The monitor RS may be a CSI-RS or an SSB.
The CSI processing delay or the CSI computation time includes at least one of: a time for measuring a channel based on the monitor-RS, for example, obtaining a channel matrix; a time for comparing a measured channel matrix with a compressed recovered channel matrix, such as calculating an SGCS or an NMSE between the two channel matrices; a time for calculating an eigenvector based on a measured channel matrix; a time for comparing a measured eigenvector with a compressed recovered eigenvector, such as calculating an SGCS or an NMSE between the two eigenvectors; a time for calculating an eTypeII codeword based on a measured channel according to a codebook configuration in the CSI report setting, for example, an eTypeII codebook; a time for comparing a measured eTypeII codeword with a compressed recovered eTypeII codeword, such as calculating an SGCS or an NMSE between the two codewords; or a time for comparing an SGCS or an NMSE with an RRC-configured or predefined threshold.

Example four:

The monitor RS may be a CSI-RS or an SSB.
A number of CSI processing units (or AI processing units, or processing units) occupied during the supervised phase is N.

Occupying N CSI processing units, a terminal behavior or an operation that needs to be processed include at least one of: measuring a channel based on the monitor-RS, for example, obtaining a measured channel matrix; comparing a measured channel matrix with a predicted channel matrix, such as calculating an SGCS or an NMSE between the two channel matrices; a time for calculating an eigenvector based on a measured channel matrix; a time for comparing a measured eigenvector with a predicted eigenvector, such as calculating an SGCS or an NMSE between the two eigenvectors; a time for calculating an eTypeII codeword based on a measured channel according to a codebook configuration in the CSI report setting, for example, an eTypeII codeword with a reported predicted eTypeII codeword, such as calculating an SGCS or an NMSE between the two codewords; or comparing an SGCS or an NMSE with an RRC-configured or predefined threshold.

Example five:

The monitor RS may be a CSI-RS or an SSB.
A number of CSI processing units occupied during the supervised phase is N.
Occupying N CSI processing units, a terminal behavior or an operation that needs to be processed include at least one of: measuring a channel based on the monitor-RS, for example, obtaining a measured channel matrix; comparing a measured channel matrix with a compressed recovered matrix, such as calculating an SGCS or an NMSE between the two channel matrices; calculating an eigenvector based on a measured channel matrix; comparing a measured eigenvector with a compressed recovered eigenvector, such as calculating an SGCS or an NMSE between the two eigenvectors; calculating an eTypeII codeword based on a measured channel according to a codebook configuration in the CSI report setting, for example, an eTypeII codeword; comparing a measured eTypeII codeword with a compressed recovered eTypeII codeword, such as calculating an SGCS or an NMSE between the two codewords; or comparing an SGCS or an NMSE with an RRC-configured or predefined threshold.

Example six:

An occupation time of N CSI processing units includes at least one of: for a periodic report or a semi-persistent report (except for a first report (initial report) of the semi-persistent report), a CPU occupation time starts from an earliest symbol of an RS, and the RS is a latest RS that is not later than a CSI reference resource, until a last symbol of the RS + a processing delay value (the processing delay in Example two); for an aperiodic report (and an first report of semi-persistent report transmitted on the PUSCH triggered by the PDCCH), a CPU occupation time starts from a first symbol of a PDCCH triggering the report until a last symbol between: the first symbol of the PDCCH triggering the report + a delay value X; and a last symbol of the RS + a processing delay. The delay value X may be understood as including a UE demodulation DCI time and the processing delay, so the delay value X is generally greater than the processing delay.
Optionally, the above RS may be understood as a resource for channel measurement and/or interference measurement.
Optionally, Example six may be performed based on Example four.

Example seven:

The CSI processing delay is defined by a protocol.
Optionally, for different SCSs, the CSI processing delay has different values.
Optionally, the CSI processing delay may be expressed as T symbols.

Example eight:

A length of the CSI processing delay may be defined in the following ways.
Method 1: reusing an existing CSI computation delay requirement, such as $Z_2$ and $Z_2'$;
Method 2: defining a new CSI computation delay requirement, such as $Z_4$ and $Z_4'$.

Example nine:

A number N of the CSI processing units is defined by a protocol.
Optionally, for different report quantities, N has different values.
Optionally, for different numbers of resources, N has different values.
Optionally, for different SCSs, N has different values.
Based on the above examples, the following related application examples are listed.

Example 1:

Processing of CSI reporting occupies a number of CPUs for a number of symbols as follows:
$O_{CPU}$ = 0 for a CSI report with CSI-ReportConfig with higher layer parameter reportQuantity set to "none" and CSI-RS-ResourceSet with higher layer parameter trsInfo configured.
$O_{CPU}$ = 1, for a CSI report with CSI-ReportConfig with higher layer parameter reportQuantity set to "cri-RSRP", "ssb-Index-RSRP", "cri-SINR", "ssb-Index-SINR", "cri-RSRP-Capability[Set]Index", "ssb-Index-RSRP-Capability[Set]Index", "cri-SINR-Capability[Set]Index", "ssb-Index-SINR-Capability[Set]Index" or "none", and CSI-RS-ResourceSet with higher layer parameters trs-Info and monitor-RS are not configured.

For a CSI report with CSI-ReportConfig with a higher layer parameter reportQuantity set to "cri-RI-PMI-CQI", "cri-RI-i1" , "cri-RI-i1-CQI", "cri-RI-CQI", or "cri-RI-LI-PMI-CQI", or "none", and CSI-RS-ResourceSet with a higher layer parameter monitor-RS configured:

if max$\{\mu_{PDCCH}, \mu_{CSI-RS}, \mu_{UL}\} \leq 3$, and if a CSI report is aperiodically triggered without transmitting a PUSCH with either a transport block or HARQ-ACK or both when $L$ = 0 CPU is occupied, where the CSI corresponds to single CSI with a wideband frequency-granularity and to at most 4 CSI-RS ports in a single resource without CRI report and where codebookType is set to "typeI-SinglePanel" or where reportQuantity is set to "cri-RI-CQI", $O_{CPU}$ = $N_{CPU}$;
if CSI-ReportConfig is configured with codebook-Type set to "typeI-SinglePanel" and a corresponding CSI-RS resource set for channel measurement is configured with two resource groups and N resource pairs, $O_{CPU}$ = $2N + M$, where M is defined in clause 5.2.1.4.2.; or
otherwise, $O_{CPU}$ = $K_s$, where $K_s$ is a number of CSI-RS resources in the CSI-RS resource set for channel measurement.

Example 2:

A UE is not expected to be configured with an aperiodic CSI trigger state containing more than $N_{CPU}$ reporting settings. Processing of a CSI report occupies a number of CPUs for a number of symbols as follows:

$O_{CPU}$ = 0 for a CSI report with CSI-ReportConfig with higher layer parameter reportQuantity set to "'none" and CSI-RS-ResourceSet with higher layer parameter trs-Info configured;
$O_{CPU}$ = 1 for a CSI report with CSI-ReportConfig with higher layer parameter reportQuantity set to "cri-RSRP", "ssb-Index-RSRP", "cri-SINR", "ssb-Index-SINR", "cri-RSRP-Capability[Set]Index", "ssb-Index-RSRP-Capability[Set]Index", "cri-SINR-Capability[Set]Index", "ssb-Index-SINR-Capability[Set] Index" or "none", and CSI-RS-ResourceSet with higher layer parameters trs-Info and monitor-RS are not configured.

For a CSI report with CSI-ReportConfig with higher layer parameter reportQuantity set to "cri-RI-PMI-CQI", "cri-RI-i1", "cri-RI-i1-CQI", "cri-RI-CQI", or "cri-RI-LI-PMI-CQI":

if max$\{\mu_{PDCCH}, \mu_{CSI-RS}, \mu_{UL}\} \leq 3$, and if a CSI report is aperiodically triggered without transmitting a PUSCH with either a transport block or HARQ-ACK or both when L = 0 CPU is occupied, where the CSI corresponds to single CSI with a wideband frequency-granularity and to at most 4 CSI-RS ports in a single resource without CRI report and where codebook Type is set to "typeI-SinglePanel" or where reportQuantity is set to "cri-RI-CQI", $O_{CPU}$ = $N_{CPU}$;
if a CSI-ReportConfig is configured with codebook-Type set to "typeI-SinglePanel" and a corresponding CSI-RS resource set for channel measurement is configured with two resource groups and N resource pairs, $O_{CPU}$ = $2N + M$, where M is defined in clause 5.2.1.4.2; or
otherwise, $O_{CPU}$ = $K_S$, where $K_S$ is a number of CSI-RS resources in the CSI-RS resource set for channel measurement.

For a CSI report with CSI-ReportConfig with higher layer parameter reportQuantity set to "none", and CSI-RS-ResourceSet with higher layer parameter monitor-RS configured:

if max$\{ \mu_{PDCCH}, \mu_{CSI-RS}, \mu_{UL}\} \leq 3$, and if a CSI report is aperiodically triggered without transmitting a PUSCH with either a transport block or HARQ-ACK or both when $L$ = 0 CPU is occupied, where the CSI corresponds to single CSI with a wideband frequency-granularity and to at most 4 CSI-RS ports in a single resource, $O_{CPU}$ = $N_{CPU}$;
otherwise, $O_{CPU}$ = $K_S$, where $K_S$ is a number of CSI-RS resources in the CSI-RS resource set for channel measurement.

The embodiments of the present disclosure also provide an apparatus for implementing any one of the above methods. For example, an apparatus is provided, including units or modules for implementing each step executed by the terminal in any one of the above methods. As another example, another apparatus is provided, including units or modules for implementing each step executed by the network device (e.g., an access network device, a core network function node, a core network device, etc.) in any one of the above methods.

It should be understood that the division of units or modules in the above apparatuses is merely a division of logical functions. In actual implementations, the units may be fully or partially integrated into a single physical entity or may be physically separated. In addition, the units or modules in the apparatus may be implemented in the form of a processor invoking software. For example, the apparatus includes a processor, which is connected to a memory for storing instructions. The processor invokes the instructions stored in the memory to implement any one of the above methods or the functions of the units or modules in the apparatus. The processor may be a general-purpose processor, such as a central processing unit (CPU) or a microprocessor. The memory may be internal or external to the apparatus. Or, the units or modules in the apparatus may be implemented in the form of a hardware circuit. Part or all of the functions of the units or modules may be realized via a design of the hardware circuit. The hardware circuit may be understood as one or more processors. For example, in an implementation, the hardware circuit is an application-specific integrated circuit (ASIC). Functions of part or all of the units or modules are realized by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of part or all of the units or modules. All units or modules of the above apparatus may be fully implemented in the form of the processor invoking software, or fully implemented in the form of the hardware circuit, or partially implemented in the form of the processor invoking software and the remaining part implemented in the form of the hardware circuit.

In the embodiments of the present disclosure, the processor is a circuit with a signal processing capability. In an implementation, the processor may be a circuit capable of reading and executing instructions, such as a central processing unit (CPU), a microprocessor, a graphics processing unit (GPU) (which may be understood as a microprocessor), a digital signal processor (DSP), or the like. In another implementation, the processor may realize certain functions via a logical relationship of the hardware circuit. The logical relationship of the hardware circuit may be fixed or reconfigured. For example, the processor may be a hardware circuit implemented as an ASIC or PLD, such as an FPGA. In a reconfigurable hardware circuit, a process in which the processor loads configuration files to configure the hardware circuit may be understood as a process that the processor loads instructions to realize the functions of part or all of the units or the modules. In addition, the hardware circuit may be designed specifically for artificial intelligence and may be understood as an ASIC, such as a neural network processing unit (NPU), a tensor processing unit (TPU), or a deep learning processing unit (DPU).

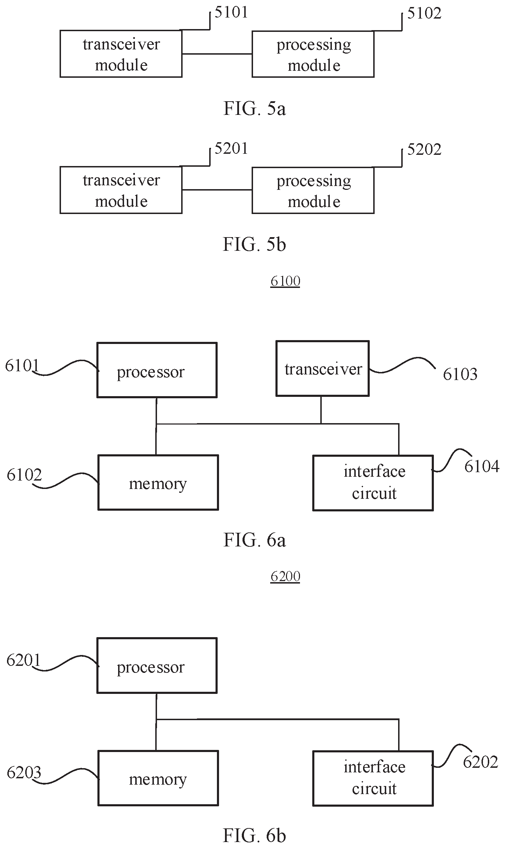

FIG. 5a is a block diagram of a terminal 101 according to an embodiment of the present disclosure. As shown in FIG. 5a, a terminal 5100 may include at least one of: a transceiver module 5101 or a processing module 5102. In some embodiments, the transceiver module 5101 is configured to receive first configuration information and second configuration information sent by a network device, in which the first configuration information includes a first RS used for a supervised phase based on a model, in which the model includes an AI model or an ML model, and the second configuration information includes a report configuration associated with the first RS or the first configuration information.

Optionally, the transceiver module 5101 is configured to perform at least one of communication steps such as sending and/or receiving executed by the terminal 101 in any one of the above methods. Optionally, the processing module 5102 is configured to perform at least one of other steps executed by the terminal 101 in any one of the above methods.

FIG. 5b is a block diagram of a network device 102 according to an embodiment of the present disclosure. As shown in FIG. 5b, a terminal 5200 may include at least one of: a transceiver module 5201 or a processing module 5202. In some embodiments, the transceiver module 5201 is configured to send first configuration information and second configuration information to a terminal, in which the first configuration information includes a first RS used for a supervised phase based on a model, in which the model includes an AI model or an ML model, and the second configuration information includes a report configuration associated with the first RS or the first configuration information.

Optionally, the transceiver module 5201 is configured to perform at least one of communication steps such as sending and/or receiving executed by the network device 102 in any one of the above methods. Optionally, the processing module 5202 is configured to perform at least one of other steps executed by the network device 102 in any one of the above methods.

In some embodiments, the transceiver module may include a sending module and/or a receiving module. The sending module and the receiving module may be separate or integrated together. Optionally, the transceiver module may be interchangeable with a transceiver.

In some embodiments, the processing module may be one module or may include a plurality of sub-modules. Optionally, the plurality of sub-modules respectively perform all or part of the steps required to be executed by the processing module. Optionally, the processing module may be interchangeable with a processor.

FIG. 6a is a block diagram of a communication device 6100 according to an embodiment of the present disclosure. The communication device 6100 may be a network device (e.g., an access network device, a core network device, etc.), or may be a terminal (e.g., a user equipment, etc.), or may be a chip, a chip system, or a processor that supports the network device to implement any one of the above methods, or may be a chip, a chip system, or a processor that supports the terminal to implement any one of the above methods. The communication device 6100 may be used to implement the method described in the above method embodiments. For details, reference may be made to the description in the above method embodiments.

As shown in FIG. 6a, the communication device 6100 may include one or more processors 6101 and a memory. The processor 6101 may be a general-purpose processor or a special-purpose processor. For example, it may be a baseband processor or a central processing unit. The baseband processor is configured to process communication protocols and communication data, and the central processing unit is configured to control communication devices (such as base stations, baseband chips, terminals, terminal chips, DU or CU, etc.) to execute computer programs and process program data. The communication device 6100 is used to perform any one of the above methods.

In some embodiments, the communication device 6100 further includes a memory 6102 coupled to the one or more processors. The memory 6102 is used to store instructions, and one or more memories 6102 may be configured. Optionally, all or part of the memory 6102 may also be outside the communication device 6100.

In some embodiments, the communication device 6100 further includes one or more transceivers 6103. When the communication device 6100 includes the one or more transceivers 6103, the transceiver 6103 performs at least one of communication steps such as sending and/or receiving in the above method, and the processor 6101 performs at least one of other steps.

In some embodiments, the transceiver may include a receiver and a transmitter, which may be separate or integrated. Optionally, terms such as transceiver, transceiver unit, transceiver machine, transceiver circuit, etc. may be used interchangeably; terms such as transmitter, sending unit, transmitter module, sending circuit, etc. may be used interchangeably; and terms such as receiver, receiving unit, receiver module, receiving circuit, etc. may be used interchangeably.

In some embodiments, the communication device 6100 further includes one or more interface circuits 6104. The interface circuit 6104 is connected to the memory 6102 and may be used to receive signals from the memory 6102 or other devices, or send signals to the memory 6102 or other devices. For example, the interface circuit 6104 may read instructions stored in the memory 6102 and send the instructions to the processor 6101.

The communication device 6100 in the description of the above embodiments may be a network device or a terminal, but the scope of the communication device 6100 described in the present disclosure is not limited herein, and the structure of the communication device 6100 may not be limited by FIG. 6a. The communication device may be a stand-alone device or may be part of a larger device. For example, the communication device may be: (1) a stand-alone IC, a chip, a chip system or a subsystem; (2) a collection of ICs including one or more ICs. Optionally, the collection of ICs may further include a storage component for storing data and computer programs; (3) an ASIC, such as a modem; (4) a module that may be embedded within other devices; (5) a receiver, a terminal, a smart terminal, a cellular phone, a wireless device, a handheld machine, a mobile unit, an vehicle-mounted device, a network device, a cloud device, an artificial intelligence device, and the like; and (6) others.

FIG. 6b is a block diagram of a chip 6200 according to an embodiment of the present disclosure. For the case where the communication device 6100 may be a chip or a chip system, reference may be made to the block diagram of the chip 6200 shown in FIG. 6b, which is not limited herein.

The chip 6200 includes one or more processors 6201. The chip 6200 is used to perform any one of the above methods.

In some embodiments, the chip 6200 further includes one or more interface circuits 6202. Optionally, the interface circuit 6202 is connected to a memory 6203. The interface circuit 6202 may be used to receive signals from the memory 6203 or other devices, and the interface circuit 6202 may be used to send the signals to the memory 6203 or other devices. For example, the interface circuit 6202 may read instructions stored in the memory 6203 and send the instructions to the processor 6201.

In some embodiments, the interface circuit 6202 performs at least one of communication steps such as sending and/or receiving in the above method, and the processor 6201 performs at least one of other steps.

In some embodiments, terms such as interface circuit, interface, transceiver pin, transceiver, etc., may be used interchangeably.

In some embodiments, the chip 6200 further includes one or more memories 6203 for storing instructions. Optionally, all or part of the memory 6203 may be outside the chip 6200.

The present disclosure also provides a storage medium for storing instructions. When the instructions are running on the communication device 6100, the communication device 6100 is caused to perform any one of the above methods. Optionally, the storage medium is an electronic storage medium. Optionally, the storage medium is a computer-readable storage medium, which is not limited herein, and it may further be a storage medium readable by other devices. Optionally, the storage medium may be a non-transitory storage medium, which is not limited herein, and it may also be a transitory storage medium.

The present disclosure also provides a program product. When the program product is executed by the communication device 6100, the communication device 6100 is caused to perform any one of the above methods. Optionally, the program product is a computer program product.

The present disclosure also provides a computer program. When the computer program is running on a computer, the computer is caused to perform any one of the above methods.

## INDUSTRIAL UTILITY

In the method of the present disclosure, the terminal receives the configuration information sent by the network device to learn about the first RS and the report configuration configured for the supervised phase, so that the terminal may select to reasonably reduce reporting in the supervised phase according to the report quantity that is configured as none in the report configuration to save a frequency and overhead of the reporting by the terminal.

## Claims

1. A method for receiving configuration information, comprising:
   receiving, by a terminal, first configuration information and second configuration information sent by a network device, wherein the first configuration information comprises a first reference signal (RS) used for a supervised phase based on a model, wherein the model comprises an artificial intelligence (AI) model or a machine learning (ML) model, and the second configuration information comprises a report configuration associated with the first RS or the first configuration information.

2. The method of claim 1, wherein a report quantity in the report configuration is configured as none.

3. The method of claim 1, wherein

   the model is used for prediction and/or compression of channel information,
   wherein the channel information comprises channel state information (CSI) and/or beam information.

4. The method of any one of claims 1 to 3, wherein a terminal behavior in the supervised phase comprises at least one of:

   performing, by the terminal, channel measurement based on the first RS;
   obtaining, by the terminal, first comparison information according to a reference result and a corresponding model output result, wherein the reference result is obtained based on the channel measurement and the corresponding model output result is obtained based on the model;
   determining, by the terminal, a first codeword according to the channel measurement and a codebook, wherein the report configuration comprises the codebook;
   obtaining, by the terminal, second comparison information according to the first codeword and a corresponding second codeword, wherein the corresponding second codeword is a codeword determined based on the model; or
   comparing, by the terminal, the first comparison information and/or the second comparison information with a corresponding threshold.

5. The method of claim 4, wherein the threshold is configured by the network device, or defined in a protocol, or predefined by the terminal.

6. The method of claim 4, wherein
   at least one of terminal behaviors occupies a first number of processing units.

7. The method of claim 6, wherein

   the report configuration is periodic or semi-persistent, and a start time of a time-domain range occupied by the first number of processing units is:

   a start time-domain unit of a second RS; and
   an end time of the time-domain range occupied by the first number of processing units is:
   a time after an end time-domain unit of the second RS and spaced from the end time-domain unit by a processing delay of the supervised phase.

8. The method of claim 7, wherein the second RS is a latest first RS that is not later than a CSI reference resource.

9. The method of claim 6, wherein

   the report configuration is aperiodic, or the report configuration corresponds to a first report of a semi-persistent report configuration, and a start time of a time-domain range occupied by the first number of processing units is:

   a first time-domain unit of a physical downlink control channel (PDCCH) triggering the aperiodic report or the first report; and
   an end time of the time-domain range occupied by the first number of processing units is a later one of:

   a time after the first time-domain unit and spaced from the first time-domain unit by a first time; and
   a time after a last time-domain unit of the first RS corresponding to reporting and spaced from the last time-domain unit by a processing delay of the supervised phase, wherein the reporting is the aperiodic reporting or the first reporting,
   wherein the first time is greater than the processing delay.

10. The method of claim 6, wherein the first number satisfies at least one of:

different first numbers are configured for different subcarrier spacings (SCSs);
different first numbers are configured for different values of the report quantity; or
different first numbers are configured for different numbers of resources of the first RS.

11. The method of any one of claims 4 to 10, wherein a processing delay of the supervised phase comprises a processing time required for at least one of terminal behaviors.

12. The method of claim 11, wherein
the processing delay comprises a second number of time-domain units.

13. The method of claim 12, wherein
the processing delay and/or the second number are defined in a protocol.

14. The method of claim 12, wherein
different second numbers are configured for different SCSs.

15. The method of claim 11, wherein

the processing delay is indicated by a first field, wherein the first field is a newly added field in a protocol, or is a reused field for indicating a computation delay of the channel measurement in the protocol.

16. The method of any one of claims 1 to 13, wherein the first RS is a resource for channel measurement and/or interference measurement, and the first RS comprises at least one of:

a channel state information-reference signal (CSI-RS); or
a synchronization signal block (SSB).

17. A method for sending configuration information, comprising:
sending, by a network device, first configuration information and second configuration information to a terminal, wherein the first configuration information comprises a first reference signal (RS) used for a supervised phase based on a model, wherein the model comprises an artificial intelligence (AI) model or a machine learning (ML) model, and the second configuration information comprises a report configuration associated with the first RS or the first configuration information.

18. The method of claim 17, wherein a report quantity in the report configuration is configured as none.

19. The method of claim 17, wherein

the model is used for prediction and/or compression of channel information,
wherein the channel information comprises channel state information (CSI) and/or beam information.

20. The method of claim 17 or 19, wherein a terminal behavior in the supervised phase comprises at least one of:

performing, by the terminal, channel measurement based on the first RS;
obtaining, by the terminal, first comparison information according to a reference result and a corresponding model output result, wherein the reference result is obtained based on the channel measurement and the corresponding model output result is obtained based on the model;
determining, by the terminal, a first codeword according to the channel measurement and a codebook, wherein the report configuration comprises the codebook;
obtaining, by the terminal, second comparison information according to the first codeword and a corresponding second codeword, wherein the corresponding second codeword is a codeword determined based on the model; or
comparing, by the terminal, the first comparison information and/or the second comparison information with a corresponding threshold.

21. The method of claim 20, wherein the threshold is configured by the network device, or defined in a protocol, or predefined by the terminal.

22. The method of claim 20, wherein
at least one of terminal behaviors occupies a first number of processing units.

23. The method of claim 22, wherein

the report configuration is periodic or semi-persistent, and a start time of a time-domain range occupied by the first number of processing units is:

a start time-domain unit of a second RS; and
an end time of the time-domain range occupied by the first number of processing units is:
a time after an end time-domain unit of the second RS and spaced from the end time-domain unit by a processing delay of the supervised phase.

24. The method of claim 23, wherein the second RS is a latest first RS that is not later than a CSI reference resource.

**25.** The method of claim 22, wherein

the report configuration is aperiodic, or the report configuration corresponds to first reporting of a semi-persistent report configuration, and a start time of a time-domain range occupied by the first number of processing units is:

a first time-domain unit of a physical downlink control channel (PDCCH) triggering the aperiodic report or the first report; and an end time of the time-domain range occupied by the first number of processing units is a later one of:

a time after the first time-domain unit and spaced from the first time-domain unit by a first time; and a time after a last time-domain unit of the first RS corresponding to reporting and spaced from the last time-domain unit by a processing delay of the supervised phase, wherein the reporting is the aperiodic reporting or the first reporting,

wherein the first time is greater than the processing delay.

**26.** The method of claim 22, wherein the first number satisfies at least one of:

different first numbers are configured for different subcarrier spacings (SCSs); different first numbers are configured for different values of the report quantity; or different first numbers are configured for different numbers of resources of the first RS.

**27.** The method of any one of claims 20 to 26, wherein a processing delay of the supervised phase comprises a processing time required for at least one of terminal behaviors.

**28.** The method of claim 27, wherein the processing delay comprises a second number of time-domain units.

**29.** The method of claim 28, wherein the processing delay and/or the second number are defined in a protocol.

**30.** The method of claim 28, wherein different second numbers are configured for different SCSs.

**31.** The method of claim 27, wherein

the processing delay is indicated by a first field,

wherein the first field is a newly added field in a protocol, or is a reused field for indicating a computation delay of the channel measurement in the protocol.

**32.** The method of any one of claims 17 to 31, wherein the first RS is a resource for channel measurement and/or interference measurement, and the first RS comprises at least one of:

a channel state information-reference signal (CSI-RS); or a synchronization signal block (SSB).

**33.** A terminal, comprising:
a transceiver module, configured to receive first configuration information and second configuration information sent by a network device, wherein the first configuration information comprises a first reference signal (RS) used for a supervised phase based on a model, wherein the model comprises an artificial intelligence (AI) model or a machine learning (ML) model, and the second configuration information comprises a report configuration associated with the first RS or the first configuration information.

**34.** A network device, comprising:
a transceiver module, configured to send first configuration information and second configuration information to a terminal, wherein the first configuration information comprises a first reference signal (RS) used for a supervised phase based on a model, wherein the model comprises an artificial intelligence (AI) model or a machine learning (ML) model, and the second configuration information comprises a report configuration associated with the first RS or the first configuration information.

**35.** A terminal, comprising:

one or more processors, wherein the network device performs the method of any one of claims 1 to 16.

**36.** A network device, comprising:

one or more processors, wherein the network device performs the method of any one of claims 17 to 32.

**37.** A communication system, comprising a terminal and a network device, wherein

the terminal is configured to implement the method of any one of claims 1 to 16, and the network device is configured to implement the method of any one of claims 17 to 32.

**38.** A storage medium for storing instructions that, when executed by a communication device, cause the communication device to implement the method of any one of claims 1 to 16, or any one of claims 17 to 32.

communication system 100

terminal 101 ——— network device 102

FIG. 1

terminal 101 | network device 102

S2101, sending first configuration information and second configuration information

S2102, sending a first RS of a supervised phase

S2103, obtaining a reference result of the supervised phase by performing channel measurement based on the first RS

S2104, obtaining comparison information according to the reference result and a corresponding model output result

S2105, comparing the comparison information with a corresponding threshold

S2106, reporting performance information

S2107, adjusting a CSI processing method according to the performance information

FIG. 2a

observation window

RS

←X→   ←Y→

←Z→

CSI   prediction window

FIG. 2b

obtaining first configuration information and second configuration information — S3101

↓

receiving and measuring a first RS — S3102

↓

obtaining a reference result of a supervised phase by performing channel measurement based on the first RS — S3103

↓

obtaining comparison information according to the reference result and a corresponding model output result — S3104

↓

comparing the comparison information with a corresponding threshold — S3105

↓

sending performance information when a trigger event is met — S3106

FIG. 3a

receiving first configuration information and second configuration information sent by the network device — S3201

FIG. 3b

sending first configuration information and second configuration information — S4101

↓

sending a first RS — S4102

↓

obtaining performance information — S4103

↓

adjusting a CSI processing method according to the performance information — S4104

FIG. 4a

sending first configuration information and second configuration information to the terminal — S4201

FIG. 4b

5101

transceiver module

5102

processing module

FIG. 5a

5201

transceiver module

5202

processing module

FIG. 5b

6100

6101

processor

transceiver

6103

6102

memory

interface circuit

6104

FIG. 6a

6200

6201

processor

6203

memory

interface circuit

6202

FIG. 6b

## INTERNATIONAL SEARCH REPORT

| International application No. |
|---|
| **PCT/CN2023/112408** |

| A. | CLASSIFICATION OF SUBJECT MATTER |
|---|---|
| | H04W 24/10(2009.01)i |

According to International Patent Classification (IPC) or to both national classification and IPC

| B. | FIELDS SEARCHED |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CJFD, DWPI, ENTXT, ENTXTC, CNTXT: 机器学习, 人工智能, 配置, 参考信号, 报告, 监督, 信道状态, AI, ML, configur+, RS, report, CSI, artificial, intelligence, machine, learning

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2023024107 A1 (NEC CORP. et al.) 02 March 2023 (2023-03-02) description, paragraphs 31-176, and figures 17-18 | 1-38 |
| X | WO 2023135557 A1 (GUANGDONG OPPO MOBILE TELECOMMUNICATIONS CORP., LTD.) 20 July 2023 (2023-07-20) description, paragraphs 21-50 | 1-38 |
| X | WO 2023108594 A1 (QUALCOMM INC. et al.) 22 June 2023 (2023-06-22) description, paragraphs 80-109 | 1-38 |
| A | CN 114760654 A (BEIJING UNISOC COMMUNICATION TECHNOLOGY CO., LTD.) 15 July 2022 (2022-07-15) entire document | 1-38 |
| A | CN 116210263 A (QUALCOMM INC.) 02 June 2023 (2023-06-02) entire document | 1-38 |
| A | US 2023189031 A1 (LENOVO (SINGAPORE) PTE. LTD.) 15 June 2023 (2023-06-15) entire document | 1-38 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 September 2023** | **07 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/112408**

| Patent document cited in search report | | | Publication date (day/month/year) | Patent family member(s) | | | Publication date (day/month/year) |
|---|---|---|---|---|---|---|---|
| WO | 2023024107 | A1 | 02 March 2023 | None | | | |
| WO | 2023135557 | A1 | 20 July 2023 | None | | | |
| WO | 2023108594 | A1 | 22 June 2023 | None | | | |
| CN | 114760654 | A | 15 July 2022 | WO | 2022148490 | A1 | 14 July 2022 |
| CN | 116210263 | A | 02 June 2023 | EP | 4201036 | A1 | 28 June 2023 |
| | | | | WO | 2022040046 | A1 | 24 February 2022 |
| US | 2023189031 | A1 | 15 June 2023 | WO | 2023111752 | A1 | 22 June 2023 |

Form PCT/ISA/210 (patent family annex) (July 2022)